# EUROPÄISCHE PATENTSCHRIFT

(11) **EP 2 745 394 B1**
(45) Veröffentlichungstag und Bekanntmachung des Hinweises auf die Patenterteilung: **16.01.2019**
(21) Anmeldenummer: 12729924.6
(22) Anmeldetag: 12.06.2012
(51) Int. Cl.: H02P 29/02, H02H 7/08, G05B 19/406, H02P 6/18

(54) **BETRIEBSZUSTANDSSCHALTUNG FÜR WECHSELRICHTER UND VERFAHREN ZUM EINSTELLEN VON BETRIEBSZUSTÄNDEN EINES WECHSELRICHTERS**
OPERATING STATE CIRCUIT FOR AN INVERTER AND METHOD FOR ADJUSTING OPERATING STATES OF AN INVERTER
CIRCUIT D'ÉTATS DE FONCTIONNEMENT POUR UN ONDULEUR ET PROCÉDÉ DE RÉGLAGE DES ÉTATS DE FONCTIONNEMENT D'UN ONDULEUR

(30) Priorität: 18.08.2011 DE 102011081173
(43) Veröffentlichungstag der Anmeldung: 25.06.2014
(73) Patentinhaber: Robert Bosch GmbH, 70442 Stuttgart (DE)
(72) Erfinder: EBERLEIN, Edwin, 70197 Stuttgart (DE); SCHOENKNECHT, Andreas, 71272 Renningen (DE); RAICHLE, Daniel, 71665 Vaihingen (DE)
(86) Internationale Anmeldenummer: PCT/EP2012/061093
(87) Internationale Veröffentlichungsnummer: WO 2013/023807

(56) Entgegenhaltungen:
- EP-A2- 0 935 336
- DE-A1- 19 518 991
- DE-A1- 19 835 576
- DE-A1-102005 046 962
- DE-A1-102006 003 254
- DE-A1-102007 020 509

## Beschreibung

Die Erfindung betrifft eine Betriebszustandsschaltung für einen Wechselrichter und ein Verfahren zum Einstellen von Betriebszuständen eines Wechselrichters, insbesondere für einen Wechselrichter zur Versorgung einer Synchronmaschine.

### Stand der Technik

Elektrische Antriebe von Hybrid- oder Elektrofahrzeugen können permanent-erregte elektrische Maschinen, insbesondere Synchronmaschinen aufweisen, welche mittels eines Pulswechselrichters mit Wechselspannung versorgt werden. Dabei kann es bei Fehlerzuständen auf der Niedervoltseite, beispielsweise bei einem Ausfall der elektronischen Ansteuerung, der Energieversorgung, verschiedener Sensoren, der Datenkommunikation oder einer Sicherung, notwendig sein, im Wechselrichter einen sicheren Zustand einzustellen, das heißt einen Schaltzustand des Wechselrichters, in welchem die Sicherheit für auf das Fahrzeug zugreifende Personen, wie beispielsweise Rettungskräfte bei einem Unfall, und für die Integrität des elektrischen Systems gewährleistet bleibt.

Die Druckschrift DE 10 2009 047 616 A1 offenbart eine Wechselrichterschaltung für eine elektrische Maschine, welche im Fehlerfall von dem Betriebszustand eines aktiven Kurzschlusses in den Betriebszustand eines Freilaufs versetzt werden kann. Die Druckschrift DE 10 2006 003 254 A1 offenbart ein Verfahren zum Abschalten einer elektrischen Maschine mit Pulswechselrichter im Falle einer Störung, bei der die elektrische Maschine zunächst in einen Freischalt-Betrieb, in dem sämtliche Schalter des Pulswechselrichters geöffnet sind, und nachfolgend in einen Kurzschluss-Modus geschaltet wird, in dem die mit dem hohen Potential verbundenen Schalter offen und die mit dem niedrigen Potential verbundenen Schalter geschlossen sind. Aus der DE 195 18 991 A1 ist ein Verfahren zum Betrieb eines Motors bekannt, bei dem zwischen einer Kurzschlussbremsung und einem generatorischen Betrieb umgeschaltet wird zur Versorgung der Elektronik des Motors wenn die Betriebsspannung des Motors einen vorgegebenen Wert unterschreitet. Aus der DE 10 2005 046 962 A1 ist ein Ansteuersystem für einen permanent erregten Elektromotor bekannt, bei dem bei einem Ausfall einer Energieversorgung die für die Motorsteuerung erforderliche Spannung dem Zwischenkreis entnommen wird. Aus der DE 198 35 576 A1 ist ein Ansteuersystem für einen permanenterregten Elektromotor bekannt, bei dem in Abhängigkeit eines Betriebszustands ein Kurzschluss zwischen den Anschlüssen des Elektromotors geschaltet wird.

### Offenbarung der Erfindung

Die vorliegende Erfindung schafft eine Wechselrichteranordnung gemäss dem Anspruch 1.

Die Erfindung schafft dabei eine Wechselrichteranordnung zum Versorgen einer n-phasigen elektrischen Maschine mit einer n-phasigen Versorgungsspannung, wobei n ≥ 1, mit einem Gleichspannungszwischenkreis, welcher von einer Hochspannungsquelle mit einer Gleichspannung versorgt wird, einem Wechselrichter mit einer Vielzahl von Schalteinrichtungen, welcher mit dem Gleichspannungszwischenkreis verbunden ist, und welcher dazu ausgelegt, eine n-phasige Versorgungsspannung an Phasenanschlüssen bereitzustellen, einer Betriebszustandsschaltung, welche dazu ausgelegt ist, die Vielzahl der Schalteinrichtungen des Wechselrichters zum Einstellen eines Freilaufzustands oder eines aktiven Kurzschlusses anzusteuern, und einer Energieversorgungseinrichtung, welche mit dem Gleichspannungszwischenkreis gekoppelt ist, und welche dazu ausgelegt ist, die Auswerteeinrichtung und die Ansteuereinrichtung mit elektrischer Energie aus dem Gleichspannungszwischenkreis zu versorgen.

Gemäß einem weiteren Aspekt schafft die vorliegende Erfindung ein Verfahren gemäss dem Anspruch 5.

### Vorteile der Erfindung

Eine Idee der vorliegenden Erfindung ist es, unabhängig von einer Lageerfassung des Polrads einer elektrischen Maschine, insbesondere einer Synchronmaschine, durch Lagegeber, eine Polradfrequenz über die Auswertung der an den Phasenanschlüssen des Wechselrichters anliegenden Polradspannung zu ermitteln. Dadurch kann in Abhängigkeit von der Polradfrequenz bzw. einer Drehzahl der Synchronmaschine eine Entscheidung über die Auswahl eines sicheren Betriebszustands des Wechselrichters getroffen werden.

Eine weitere Idee der vorliegenden Erfindung ist es, zwischen zwei verschiedenen Betriebszuständen zu wählen, welche drehzahlabhängige Nachteile bei der Ansteuerung des Wechselrichters vermeiden können. Durch das Einstellen eines Freilaufzustands des Wechselrichters bei niedrigen Drehzahlen einerseits kann vermieden werden, dass ein hohes Bremsmoment auf der Welle der elektrischen Maschine auftritt. Durch das Einstellen eines aktiven Kurzschlusses bei hohen Drehzahlen andererseits kann ein Ansteigen der Zwischenkreisspannung und ein Auftreten hoher Ladeströme vermieden werden, was ansonsten zu Schädigungen der Leistungselektronik und/oder der Hochspannungsenergiequelle führen könnte.

Erfindungsgemäss ist die Ansteuereinrichtung dazu ausgelegt, den Wechselrichter in einen Freilaufzustand zu schalten, wenn die ermittelte Drehzahl kleiner als ein vorbestimmter Drehzahlschwellwert ist, und den Wechselrichter in einen aktiven Kurzschluss zu schalten, wenn die ermittelte Drehzahl größer oder gleich dem vorbestimmten Drehzahlschwellwert ist. Auf diese Weise kann die Sicherheit der elektrischen Maschine und der Ansteuerelektronik optimiert werden.
In einer vorteilhaften Ausführungsform kann die Auswerteeinrichtung dazu ausgelegt sein, die Polradspannung der elektrischen Maschine zu erfassen. Dies ermöglicht eine direkte Korrelation der erfassten Polradspannung mit der momentanen Drehzahl der elektrischen Maschine.
Gemäß einer vorteilhaften Ausführungsform kann die Ansteuereinrichtung dazu ausgelegt sein, die Schalteinrichtungen des Wechselrichters für eine vorbestimmte Zeitspanne in einen Freilaufmodus zu schalten, wenn die Gleichspannung in dem Gleichspannungszwischenkreis unter einen Zwischenkreisschwellwert sinkt. Da die Ansteuereinrichtung einer erfindungsgemäßen Wechselrichteranordnung über die Energieversorgungseinrichtung aus der Hochvoltseite der Wechselrichteranordnung gespeist wird, kann die Betriebszustandsschaltung sich sozusagen selbst mit Energie versorgen, indem der Wechselrichter für kurze Zeit in den Freilaufzustand geschaltet wird, wodurch die induzierte Polradspannung über die Dioden der Schalteinrichtungen des Wechselrichters zurück in den Gleichspannungszwischenkreis gespeist wird.

Erfindungsgemäss wird das nur durchgeführt, wenn ein Fehlerzustand der elektrischen Maschine detektiert wird. Das Verfahren zum Ansteuern eines Wechselrichters wird also lediglich durchgeführt, wenn der eigentliche Normalbetrieb des Wechselrichters durch einen Defekt oder einen Ausfall einer Komponente der elektrischen Maschine oder deren Ansteuerelementen gestört wird.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer Wechselrichteranordnung;
- Fig. 2: eine schematische Darstellung einer Wechselrichteranordnung gemäß einer weiteren Ausführungsform der Erfindung; und
- Fig. 3: eine schematische Darstellung eines Verfahrens zum Betreiben eines Wechselrichters gemäß einer weiteren Ausführungsform der Erfindung.

In den Figuren sind gleiche und funktionsgleiche Elemente, Merkmale und Komponenten - sofern nichts Anderes ausgeführt ist - jeweils mit denselben Bezugszeichen versehen. Es versteht sich, dass Komponenten und Elemente in den Zeichnungen aus Gründen der Übersichtlichkeit nicht notwendigerweise maßstabsgetreu wiedergegeben sind.

Weitere mögliche Ausgestaltungen und Weiterbildungen und Implementierungen der Erfindung umfassen auch nicht explizit genannte Kombinationen von zuvor oder im Folgenden beschriebenen Merkmalen der Erfindung.

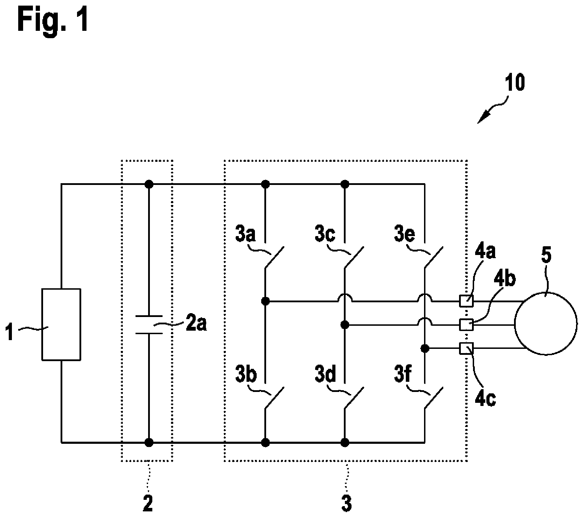

Fig. 1 zeigt eine schematische Darstellung einer Wechselrichteranordnung 10 zum Betreiben einer elektrische Maschine 5. Die Wechselrichteranordnung umfasst eine Hochspannungsenergiequelle 1, wie beispielsweise eine Traktionsbatterie eines elektrisch betriebenen Fahrzeugs, einen Gleichspannungszwischenkreis 2 und einen Wechselrichter 3. Die elektrische Maschine 5 kann beispielsweise eine Synchronmaschine 5 bzw. ein Synchronmotor 5 sein.

Der Gleichspannungszwischenkreis 2 kann beispielsweise einen Zwischenkreiskondensator 2a aufweisen, welcher zur Zwischenspeicherung von elektrischer Energie aus der Hochspannungsenergiequelle 1 eingesetzt werden kann. An den Ausgangsanschlüssen des Gleichspannungszwischenkreises 2 kann ein Wechselrichter 3, beispielsweise eine Pulswechselrichterschaltung, angeschlossen sein. Der Wechselrichter 3 ist im vorliegenden Beispiel der Fig. 1 als Vollbrückenschaltung oder B6-Brücke ausgelegt. Dazu umfasst der Wechselrichter 3 obere Halbbrückenzweige mit hochspannungsseitigen Schalteinrichtungen 3a, 3c, 3e und untere Halbbrückenzweige mit niederspannungsseitigen Schalteinrichtungen 3b, 3d, 3f. Die Schalteinrichtungen 3a bis 3f können beispielsweise jeweils Leistungshalbleiterschalter aufweisen. Die Schalteinrichtungen 3a bis 3f können beispielsweise Feldeffekttransistorschalter wie n-MOSFETs (n-leitende Metal Oxide Semiconductor Field-Effect Transistors, Anreicherungstyp), JFETs (Junction Field-Effect Transistors) oder p-MOSFETs (p-leitende Metal Oxide Semiconductor Field-Effect Transistors) aufweisen. Die Schalteinrichtungen 3a bis 3f können auch IGBTs (Insulated Gate Bipolar Transistors, Bipolartransistor mit isolierter Gate-Elektrode) aufweisen.

Der Wechselrichter 3 kann durch entsprechende Ansteuerung der Schalteinrichtungen 3a bis 3f eine dreiphasige Wechselspannung zur Ansteuerung der elektrischen Maschine 5 erzeugen. Dazu wird an den jeweiligen Phasenanschlüssen 4a, 4b, 4c des Wechselrichters 3 eine entsprechende Phasenspannung erzeugt. In dem in Fig. 1 dargestellten Beispiel sind drei Phasenanschlüsse und eine B6-Brücke gezeigt, wobei jede andere Anzahl von Phasenanschlüssen mit einer entsprechenden Anzahl an Halbbrückenzweigen ebenso möglich ist.

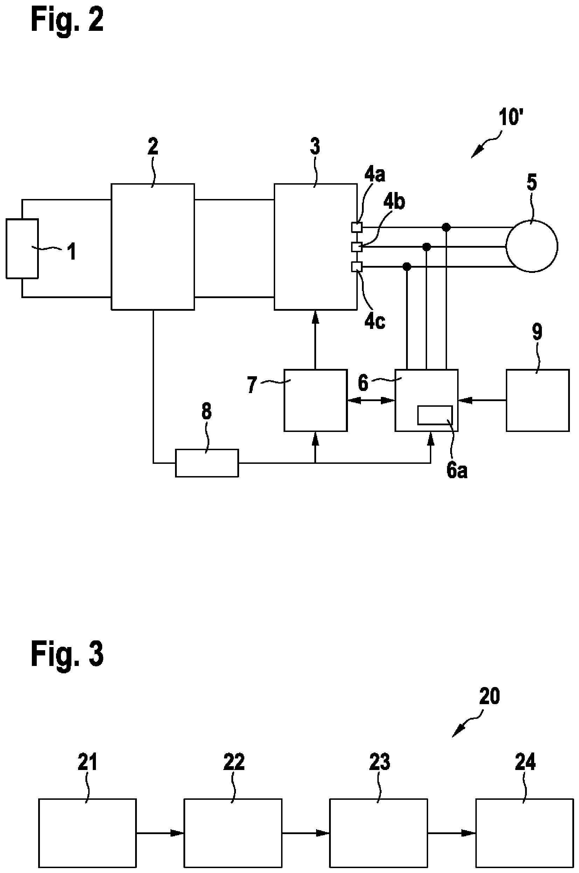

Fig. 2 zeigt eine Wechselrichteranordnung 10', welche die Merkmale der Wechselrichteranordnung 10 aufweisen kann. Insbesondere sind in Fig. 2 eine Hochspannungsenergiequelle 1, ein Gleichspannungszwischenkreis 2 und ein Wechselrichter 3 gezeigt, welche in ähnlicher Weise wie in Fig. 1 ausgestaltet und miteinander gekoppelt sein können. Der Wechselrichter 3 kann dabei dazu ausgelegt sein, Phasenspannungen an den Phasenanschlüssen 4a, 4b, 4c für den Betrieb einer elektrischen Maschine 5 bereitzustellen.

Die Wechselrichteranordnung 10' umfasst weiterhin eine Energieversorgungseinrichtung 8, eine Ansteuereinrichtung 7 und eine Auswerteeinrichtung 6. Die Ansteuereinrichtung 7 und die Auswerteeinrichtung 6 können dabei durch die Energieversorgungseinrichtung 8, welche mit dem Gleichspannungszwischenkreis 2 gekoppelt ist, mit elektrischer Energie von der Hochvoltseite des Wechselrichters 3 versorgt werden. Zusätzlich kann eine Niedervoltenergieversorgungseinrichtung 9 vorgesehen sein, die die Auswerteeinrichtung 6 mit elektrischer Energie von der Niedervoltseite des Wechselrichters 3 versorgt.

Die Energieversorgungseinrichtung 8 kann beispielsweise einen Tiefsetzsteller umfassen, die an dem Gleichspannungszwischenkreis 2 anliegende Hochspannung in eine niedrigere Versorgungsspannung für die Ansteuereinrichtung 7 und die Auswerteeinrichtung 6 wandelt. Die Energieversorgungseinrichtung 8 kann dabei dazu ausgelegt sein, nur dann für die Energieversorgung der Ansteuereinrichtung 7 und der Auswerteeinrichtung 6 zu sorgen, wenn die Niedervoltenergieversorgungseinrichtung 9 ausgefallen ist, oder auf der Niedervoltseite des Wechselrichters ein sonstiger Fehlerzustand aufgetreten ist.

Die Auswerteeinrichtung 6 ist mit den Phasenanschlüssen 4a, 4b, 4c des Wechselrichters 3 verbunden und kann dazu ausgelegt sein, Ausgangsspannungen des Wechselrichters 3 zu erfassen. Insbesondere kann die Auswerteeinrichtung 6 dazu ausgelegt sein, induzierte Polradspannungen in der elektrischen Maschine 5 zu erfassen. Die Auswerteeinrichtung 6 kann beispielsweise einen Mikrocontroller 6a umfassen, welcher die Polradspannung in eine momentane Drehzahl bzw. Polradfrequenz der elektrischen Maschine 5 umrechnet.

In Abhängigkeit von der ermittelten Drehzahl kann die Ansteuereinrichtung 7 dann die Schalteinrichtungen des Wechselrichters 3 derart ansteuern, dass bei einem Fehlerzustand auf der Niedervoltseite des Wechselrichters, beispielsweise bei einem Ausfall des Mikrocontrollers für den drehmomentstellenden Pfad, bei einem Ausfall der Energieversorgung des drehmomentstellenden Pfads, bei einem Ausfall des Lagegebers der elektrischen Maschine, bei einem Ausfalls der Stromsensierung, bei einem Ausfall der Datenkommunikation zum Mikrocontroller oder dergleichen, ein sicherer Betriebszustand des Wechselrichters 3 eingestellt wird.

Wird in der in Fig. 2 dargestellten Wechselrichteranordnung 10' ein Fehler erkannt, so kann die elektrische Maschine 5 durch Schließen der drei Schalteinrichtungen 3b, 3d, 3f oder der drei Schalteinrichtungen 3b, 3d, 3f des Wechselrichters 3 in einen aktiven Kurzschluss geschaltet werden. Dabei verhält sich die elektrische Maschine 5 elektrisch neutral, das heißt, die elektrische Maschine 5 nimmt weder elektrische Leistung vom Wechselrichter 3 auf noch gibt die elektrische Maschine 5 elektrische Leistung an den Wechselrichter 3 ab. Die elektrische Maschine 5 erzeugt dabei ein Kurzschlussmoment bzw. Bremsmoment an der Welle.

Alternativ kann der Wechselrichter 3 die Schalteinrichtungen 3a bis 3f sperrend schalten, das heißt, einen Freilaufzustand des Wechselrichters einstellen, in dem die elektrische Maschine 5 durch die Induktion eine drehzahlabhängige Polradspannung erzeugt.

Bei niedrigen Drehzahlen jedoch kann die elektrische Maschine 5 ein hohes Bremsmoment erzeugen, so dass die Ansteuereinrichtung 7 dazu ausgelegt ist, in dem Wechselrichter 3 einen Freilaufzustand einzustellen, wenn die in der Auswerteeinrichtung 6 ermittelte momentane Drehzahl einen vorbestimmten Drehzahlschwellwert unterschreitet. Hingegen kann bei hohen Drehzahlen die hohe induzierte Polradspannung die Spannung in dem Gleichspannungszwischenkreis übersteigen und hohe Ladeströme auf der Hochvoltseite des Wechselrichters erzeugen, was zu Schädigungen der Leistungselektronik und der Hochspannungsenergiequelle 1 führen kann. In diesem Fall kann die die Ansteuereinrichtung 7 dazu ausgelegt ist, in dem Wechselrichter 3 einen aktiven Kurzschluss einzustellen, wenn die in der Auswerteeinrichtung 6 ermittelte momentane Drehzahl einen vorbestimmten Drehzahlschwellwert überschreitet.

Fig. 3 zeigt eine schematische Darstellung eines Verfahrens zum Betreiben eines Wechselrichters. Das Verfahren 20 kann insbesondere zum Einstellen von Betriebszuständen des Wechselrichters 3 in Fig. 1 und 2 eingesetzt werden, welcher eine n-phasige elektrische Maschine 5 über Phasenanschlüsse 4a, 4b, 4c mit einer n-phasigen Versorgungsspannung versorgt. Das Verfahren 20 umfasst in einem ersten Schritt 21 ein Erfassen von Ausgangsspannungen an den Phasenanschlüssen 4a, 4b, 4c des Wechselrichters 4. In einem zweiten Schritt 22 erfolgt ein Ermitteln einer Drehzahl der elektrischen Maschine 5 auf der Basis der erfassten Ausgangsspannungen. In den Schritten 23 und 24 kann dann ein Ansteuern von Schalteinrichtungen 3a bis 3f des Wechselrichters 3 zum Einstellen sicherer Betriebszustände erfolgen. Beispielsweise kann ein Freilaufzustand eingestellt werden, wenn die ermittelte Drehzahl kleiner als ein vorbestimmter Drehzahlschwellwert ist. Alternativ kann ein aktiver Kurzschluss eingestellt werden, wenn die ermittelte Drehzahl größer oder gleich dem vorbestimmten Drehzahlschwellwert ist.

## Patentansprüche

1. Wechselrichteranordnung (10') zum Versorgen einer n-phasigen elektrischen Maschine (5) mit einer n-phasigen Versorgungsspannung, wobei n ≥ 1, mit:
einem Gleichspannungszwischenkreis (2), welcher von einer Hochspannungsquelle (1) mit einer Gleichspannung versorgt wird;
einem Wechselrichter (3) mit einer Vielzahl von Schalteinrichtungen (3a, 3b, 3c, 3d, 3e, 3f), welcher mit dem Gleichspannungszwischenkreis (2) verbunden ist, und welcher dazu ausgelegt, eine n-phasige Versorgungsspannung an Phasenanschlüssen (4a, 4b, 4c) bereitzustellen;
einer Betriebszustandsschaltung zum Ansteuern des Wechselrichters (3), welcher die n-phasige elektrische Maschine (5) über die Phasenanschlüsse (4a, 4b, 4c) mit der n-phasigen Versorgungsspannung versorgt, wobei n ≥ 1, mit:
einer Ansteuereinrichtung (7), welche mit einer Auswerteeinrichtung (6) gekoppelt ist, und welche dazu ausgelegt ist, in Abhängigkeit von einer ermittelten Drehzahl den Wechselrichter (3) in einen Freilaufzustand oder einen aktiven Kurzschluss zu schalten,
wobei die Auswerteeinrichtung (6) mit den Phasenanschlüssen (4a, 4b, 4c) des Wechselrichters (3) verbunden ist und dazu ausgelegt ist, Ausgangsspannungen des Wechselrichters (3) an den Phasenanschlüssen (4a, 4b, 4c) zu erfassen und auf der Basis der erfassten Ausgangsspannungen die Drehzahl der elektrischen Maschine (5) zu ermitteln,
wobei die Betriebszustandsschaltung dazu ausgelegt ist, die Vielzahl der Schalteinrichtungen (3a, 3b, 3c, 3d, 3e, 3f) des Wechselrichters (3) zum Einstellen eines Freilaufzustands oder eines aktiven Kurzschlusses anzusteuern; und
einer Energieversorgungseinrichtung (8), welche mit dem Gleichspannungszwischenkreis (2) gekoppelt ist, und welche dazu ausgelegt ist, die Auswerteeinrichtung (6) und die Ansteuereinrichtung (7) mit elektrischer Energie aus dem Gleichspannungszwischenkreis zu versorgen,
wobei die Ansteuereinrichtung (7) dazu ausgelegt ist, den Wechselrichter (3) in einen Freilaufzustand zu schalten, wenn die ermittelte Drehzahl kleiner als ein vorbestimmter Drehzahlschwellwert ist, und den Wechselrichter (3) in einen aktiven Kurzschluss zu schalten, wenn die ermittelte Drehzahl größer oder gleich dem vorbestimmten Drehzahlschwellwert ist,
wobei das Ansteuern der Schalteinrichtungen (3a, 3b, 3c, 3d, 3e, 3f) nur durchgeführt wird, wenn ein Fehlerzustand der elektrischen Maschine (5) detektiert wird.

2. Wechselrichteranordnung (10') nach Anspruch 1, wobei die Auswerteeinrichtung (6) dazu ausgelegt ist, die Polradspannung der elektrischen Maschine (5) zu erfassen.

3. Wechselrichteranordnung (10') nach einem der Ansprüche 1 bis 2, wobei die Auswerteeinrichtung (6) einen Mikrocontroller (6a) umfasst.

4. Wechselrichteranordnung (10') nach einem der vorhergehenden Ansprüche, wobei die Ansteuereinrichtung (7) dazu ausgelegt ist, die Schalteinrichtungen (3a, 3b, 3c, 3d, 3e, 3f) des Wechselrichters (3) für eine vorbestimmte Zeitspanne in einen Freilaufmodus zu schalten, wenn die Gleichspannung in dem Gleichspannungszwischenkreis unter einen Zwischenkreisschwellwert sinkt.

5. Verfahren (20) zum Einstellen von Betriebszuständen eines Wechselrichters (3), welcher eine n-phasige elektrische Maschine (5) über Phasenanschlüsse (4a, 4b, 4c) mit einer n-phasigen Versorgungsspannung versorgt, wobei n ≥ 1, mit den Schritten:
Erfassen (21) von Ausgangsspannungen an den Phasenanschlüssen (4a, 4b, 4c) des Wechselrichters (3);
Ermitteln (22) einer Drehzahl der elektrischen Maschine (5) auf der Basis der erfassten Ausgangsspannungen;
Ansteuern (23) von Schalteinrichtungen (3a, 3b, 3c, 3d, 3e, 3f) des Wechselrichters (3) zum Einstellen eines Freilaufzustands, wenn die ermittelte Drehzahl kleiner als ein vorbestimmter Drehzahlschwellwert ist; und
Ansteuern (24) von Schalteinrichtungen (3a, 3b, 3c, 3d, 3e, 3f) des Wechselrichters (3) zum Einstellen eines aktiven Kurzschlusses, wenn die ermittelte Drehzahl größer oder gleich dem vorbestimmten Drehzahlschwellwert ist, wobei das Ansteuern der Schalteinrichtungen (3a, 3b, 3c, 3d, 3e, 3f) nur durchgeführt wird, wenn ein Fehlerzustand der elektrischen Maschine (5) detektiert wird.

6. Verfahren (20) nach Anspruch 5, weiterhin mit den Schritten:
Ermitteln einer Gleichspannung eines mit den Eingangsanschlüssen des Wechselrichters (3) verbundenen Gleichspannungszwischenkreises (2); und
Ansteuern von Schalteinrichtungen (3a, 3b, 3c, 3d, 3e, 3f) des Wechselrichters (3) zum Einstellen des Freilaufzustands für eine vorbestimmte Zeitspanne, wenn die ermittelte Gleichspannung unterhalb eines vorbestimmten Zwischenkreisschwellwerts liegt.

7. Verfahren (20) nach einem der Ansprüche 5 bis 6, wobei der Schritt des Erfassens der Ausgangsspannungen ein Erfassen der Polradspannung der elektrischen Maschine (5) umfasst.

## Claims

1. Inverter arrangement (10') for supplying an n-phase supply voltage to an n-phase electric machine (5), where n ≥ 1, comprising:
a DC voltage intermediate circuit (2), to which a DC voltage is supplied from a high-voltage source (1);
an inverter (3) comprising a multiplicity of switching devices (3a, 3b, 3c, 3d, 3e, 3f), which is connected to the DC voltage intermediate circuit (2) and is designed to provide an n-phase supply voltage at phase connections (4a, 4b, 4c);
an operating state circuit for driving the inverter (3), which supplies the n-phase supply voltage to the n-phase electric machine (5) via the phase connections (4a, 4b, 4c), where n ≥ 1, comprising:
a drive device (7), which is coupled to an evaluation device (6) and which is designed to switch the inverter (3) into a freewheeling state or into an active short circuit in dependence on a determined speed,
wherein the evaluation device (6) is connected to the phase connections (4a, 4b, 4c) of the inverter (3) and is designed to detect output voltages of the inverter (3) at the phase connections (4a, 4b, 4c) and to determine the speed of the electric machine (5) on the basis of the detected output voltages,
wherein the operating state circuit is designed to drive the multiplicity of switching devices (3a, 3b, 3c, 3d, 3e, 3f) of the inverter (3) for setting a freewheeling state or an active short circuit; and
an energy supply device (8), which is coupled to the DC voltage intermediate circuit (2) and which is designed to supply electrical energy from the DC voltage intermediate circuit to the evaluation device (6) and the drive device (7),
wherein the drive device (7) is designed to switch the inverter (3) into a freewheeling state when the determined speed is less than a predetermined speed threshold value and to switch the inverter (3) into an active short circuit when the determined speed is greater than or equal to the predetermined speed threshold value,
wherein the driving of the switching devices (3a, 3b, 3c, 3d, 3e, 3f) is only implemented when a fault state of the electric machine (5) is detected.

2. Inverter arrangement (10') according to Claim 1, wherein the evaluation device (6) is designed to detect the field emf of the electric machine (5).

3. Inverter arrangement (10') according to one of Claims 1 to 2, wherein the evaluation device (6) comprises a microcontroller (6a).

4. Inverter arrangement (10') according to one of the preceding claims, wherein the drive device (7) is designed to switch the switching devices (3a, 3b, 3c, 3d, 3e, 3f) of the inverter (3) into a freewheeling mode for a predetermined time period when the DC voltage in the DC voltage intermediate circuit falls below an intermediate circuit threshold value.

5. Method (20) for setting operating states of an inverter (3), which supplies an n-phase supply voltage to an n-phase electric machine (5) via phase connections (4a, 4b, 4c), where n ≥ 1, comprising the following steps:
detecting (21) output voltages at the phase connections (4a, 4b, 4c) of the inverter (3);
determining (22) a speed of the electric machine (5) on the basis of the detected output voltages;
driving (23) switching devices (3a, 3b, 3c, 3d, 3e, 3f) of the inverter (3) for setting a freewheeling state when the determined speed is less than a predetermined speed threshold value; and
driving (24) switching devices (3a, 3b, 3c, 3d, 3e, 3f) of the inverter (3) for setting an active short circuit when the determined speed is greater than or equal to the predetermined speed threshold value, wherein the driving of the switching devices (3a, 3b, 3c, 3d, 3e, 3f) is only implemented when a fault state of the electric machine (5) is detected.

6. Method (20) according to Claim 5, further comprising the following steps:
determining a DC voltage of a DC voltage intermediate circuit (2), which is connected to the input connections of the inverter (3); and
driving switching devices (3a, 3b, 3c, 3d, 3e, 3f) of the inverter (3) for setting the freewheeling state for a predetermined time period when the determined DC voltage is below a predetermined intermediate circuit threshold value.

7. Method (20) according to one of Claims 5 to 6, wherein the step of detecting the output voltages comprises detecting the field emf of the electric machine (5) .

## Revendications

1. Arrangement onduleur (10') destiné à l'alimentation d'une machine électrique (5) à n phases avec une tension d'alimentation à n phases, avec n ≥ 1, comprenant :
un circuit intermédiaire de tension continue (2) qui est alimenté par une source de haute tension (1) avec une tension continue ;
un onduleur (3) comprenant une pluralité de dispositifs de commutation (3a, 3b, 3c, 3d, 3e, 3f), lequel est relié au circuit intermédiaire de tension continue (2) et est conçu pour délivrer une tension d'alimentation à n phases sur des bornes de phase (4a, 4b, 4c) ;
un circuit d'état opérationnel destiné à piloter l'onduleur (3), lequel alimente la machine électrique (5) à n phases avec la tension d'alimentation à n phases par le biais des bornes de phase (4a, 4b, 4c), avec n ≥ 1,
comprenant :
un dispositif de pilotage (7) qui est connecté à un dispositif d'interprétation (6) et qui est conçu pour commuter l'onduleur (3) dans un état de roue libre ou dans un court-circuit actif en fonction de la vitesse de rotation déterminée,
le dispositif d'interprétation (6) étant relié aux bornes de phase (4a, 4b, 4c) de l'onduleur (3) et étant conçu pour détecter des tensions de sortie de l'onduleur (3) au niveau des bornes de phase (4a, 4b, 4c) et déterminer la vitesse de rotation de la machine électrique (5) sur la base des tensions de sortie détectées
le circuit d'état opérationnel étant conçu pour piloter la pluralité de dispositifs de commutation (3a, 3b, 3c, 3d, 3e, 3f) de l'onduleur (3) en vue d'établir un état de roue libre ou un court-circuit actif ; et
un dispositif d'alimentation en énergie (8) qui est connecté au circuit intermédiaire de tension continue (2) et qui est conçu pour alimenter le dispositif d'interprétation (6) et le dispositif de pilotage (7) en énergie électrique à partir du circuit intermédiaire de tension continue,
le dispositif de pilotage (7) étant conçu pour commuter l'onduleur (3) dans un état de roue libre lorsque la vitesse de rotation déterminée est inférieure à un seuil de vitesse de rotation prédéterminé et pour commuter l'onduleur (3) dans un court-circuit actif lorsque la vitesse de rotation déterminée est égale ou supérieure au seuil de vitesse de rotation prédéterminé,
le pilotage des dispositifs de commutation (3a, 3b, 3c, 3d, 3e, 3f) n'étant effectué que lorsqu'un état de défaut de la machine électrique (5) est détecté.

2. Arrangement onduleur (10') selon la revendication 1, le dispositif d'interprétation (6) étant conçu pour détecter la force électromotrice de la machine électrique (5).

3. Arrangement onduleur (10') selon l'une des revendications 1 et 2, le dispositif d'interprétation (6) comprenant un microcontrôleur (6a).

4. Arrangement onduleur (10') selon l'une des revendications précédentes, le dispositif de pilotage (7) étant conçu pour commuter les dispositifs de commutation (3a, 3b, 3c, 3d, 3e, 3f) de l'onduleur (3) dans un mode de roue libre pendant un intervalle de temps prédéterminé lorsque la tension continue dans le circuit intermédiaire de tension continue chute au-dessous d'une valeur de seuil de circuit intermédiaire.

5. Procédé (20) de réglage des états opérationnels d'un onduleur (3) qui alimente une machine électrique (5) à n phases par le biais de bornes de phase (4a, 4b, 4c) avec une tension d'alimentation à n phases, avec n ≥ 1, comprenant les étapes suivantes :
détection (21) de tensions de sortie au niveau des bornes de phase (4a, 4b, 4c) de l'onduleur (3) ;
détermination (22) d'une vitesse de rotation de la machine électrique (5) sur la base des tensions de sortie détectées ;
pilotage (24) de dispositifs de commutation (3a, 3b, 3c, 3d, 3e, 3f) de l'onduleur (3) en vue d'établir un état de roue libre lorsque la vitesse de rotation déterminée est inférieure à une valeur de seuil de vitesse de rotation prédéterminée ; et
pilotage (23) de dispositifs de commutation (3a, 3b, 3c, 3d, 3e, 3f) de l'onduleur (3) en vue d'établir un court-circuit actif lorsque la vitesse de rotation déterminée est égale ou supérieure à la valeur de seuil de vitesse de rotation prédéterminée, le pilotage des dispositifs de commutation (3a, 3b, 3c, 3d, 3e, 3f) n'étant effectué que lorsqu'un état de défaut de la machine électrique (5) est détecté.

6. Procédé (20) selon la revendication 5, comprenant en outre les étapes suivantes :
détermination de la tension continue d'un circuit intermédiaire de tension continue (2) relié aux bornes d'entrée de l'onduleur (3) ; et
pilotage de dispositifs de commutation (3a, 3b, 3c, 3d, 3e, 3f) de l'onduleur (3) en vue d'établir un état de roue libre pendant un intervalle de temps prédéterminé lorsque la tension continue déterminée est inférieure à une valeur de seuil de circuit intermédiaire prédéterminée.

7. Procédé (20) selon l'une des revendications 5 à 6, l'étape de détection des tensions de sortie comprenant une détection de la force électromotrice de la machine électrique (5).
